# EUROPEAN PATENT SPECIFICATION

(11) **EP 2 922 060 B1**
(45) Date of publication and mention of the grant of the patent: **25.09.2019**
(21) Application number: 15156929.0
(22) Date of filing: 27.02.2015
(51) Int. Cl.: G06F 16/30

(54) **Extraction method and device**
Extraktionsverfahren und Vorrichtung
Procédé et dispositif d'extraction

(30) Priority: 17.03.2014 JP 2014054208
(43) Date of publication of application: 23.09.2015
(73) Proprietor: FUJITSU LIMITED, Kawasaki-shi, Kanagawa 211-8588 (JP)
(72) Inventor: Oguchi, Atsushi, Kanagawa 211-8588 (JP); Endo, Susumu, Kanagawa 211-8588 (JP); Baba, Takayuki, Kanagawa 211-8588 (JP); Fujita, Sokichi, Kanagawa 211-8588 (JP); Muramatsu, Tatsuma, Kanagawa 211-8588 (JP)
(74) Representative: Hoffmann Eitle

(56) References cited:
- WO-A1-2005/076594
- WO-A2-2004/014061
- WO-A2-2006/092765
- JP-A- 2008 511 186
- US-A1- 2009 202 217
- PENG XU ET AL: "Algorithms and system for segmentation and structure analysis in soccer video", MULTIMEDIA AND EXPO, 2001. ICME 2001. IEEE INTERNATIONAL CONFERENCE ON, ADVANCED DISTRIBUTED LEARNING, 22 August 2001 (2001-08-22), pages 928-931, XP002393276, ISBN: 978-0-7695-1198-6
- XIE L ET AL: "Structure analysis of soccer video with domain knowledge and hidden Markov models", PATTERN RECOGNITION LETTERS, ELSEVIER, AMSTERDAM, NL, vol. 25, no. 7, 1 May 2004 (2004-05-01), pages 767-775, XP004500944, ISSN: 0167-8655, DOI: 10.1016/J.PATREC.2004.01.005
- MONEY ET AL: "Video summarisation: A conceptual framework and survey of the state of the art", JOURNAL OF VISUAL COMMUNICATION AND IMAGE REPRESENTATION, ACADEMIC PRESS, INC, US, vol. 19, no. 2, 28 December 2007 (2007-12-28), pages 121-143, XP022404518, ISSN: 1047-3203, DOI: 10.1016/J.JVCIR.2007.04.002

## Description

### FIELD

The embodiments discussed herein are related to a recording medium storing an extraction program, an extraction method, and an extraction device.

### BACKGROUND

Hitherto, services exist that distribute footage captured of a soccer game both as a live distribution, and as a distribution of Video On Demand (VOD) content. In such services, sometimes there are occasions when the extraction of a particular scene from footage is desired.

For example, an exciting scene is recognized as being when a sharp rise in sound intensity is detected in audio data corresponding to footage.

There has also been a proposal to identify highlight segments in video including a frame sequence.

### Related Patent Documents

Japanese National Publication of International Patent Application No. 2008-511186 In the extraction of scenes described above, sometimes, for example, the extraction of breaks in play is desired.

However, handling extraction of breaks in play is problematic for conventional technology.

Document WO 2005/076594 A1 discloses a method for indexing a video footage.

### SUMMARY

An object of an aspect of the technology disclosed herein is to extract a break in play from captured footage of a soccer game.

According to an aspect of the embodiments, a non-transitory recording medium stores an extraction program that causes a computer to execute a process. The process includes detecting a transition between a close-up captured image and a long distance captured image from captured images obtained by capturing a sports game, and, based on the detected transition, extracting a timing corresponding to a break in play in the sports game, or extracting a captured image corresponding to a break in play in the sports game.

### BRIEF DESCRIPTION OF DRAWINGS

Fig. 1 is a functional block diagram illustrating a schematic configuration of a footage distribution system according to an exemplary embodiment;
Fig. 2 is a diagram explaining an example of editing;
Fig. 3 is a diagram explaining inter-frame differences;
Fig. 4 is a diagram illustrating an example of a long distance frame;
Fig. 5 is a diagram illustrating an example of a close- up frame;
Fig. 6 is a diagram explaining extraction of frames representing the start and end of a single play;
Fig. 7 is a diagram illustrating an example of a metadata file;
Fig. 8 is a schematic block diagram illustrating an example of a computer that functions as an extraction device;
Fig. 9 is a schematic block diagram illustrating an example of a computer that functions as a distribution device;
Fig. 10 is a flowchart illustrating an example of editing processing;
Fig. 11 is a flowchart illustrating an example of extraction processing; and Fig. 12 is a flowchart illustrating an example of distribution processing.

### DESCRIPTION OF EMBODIMENTS

The object of the invention is achieved by the subject-matter of the independent claims. Advantageous embodiments are defined in the dependent claims. Further examples are provided for facilitating the understanding of the invention.

Detailed explanation follows below regarding examples of exemplary embodiments of the technology disclosed herein with reference to the drawings. In each of the exemplary embodiments below, explanation is given regarding an example in which an extraction device of the technology disclosed herein is applied to a footage distribution system that distributes captured footage of a soccer match.

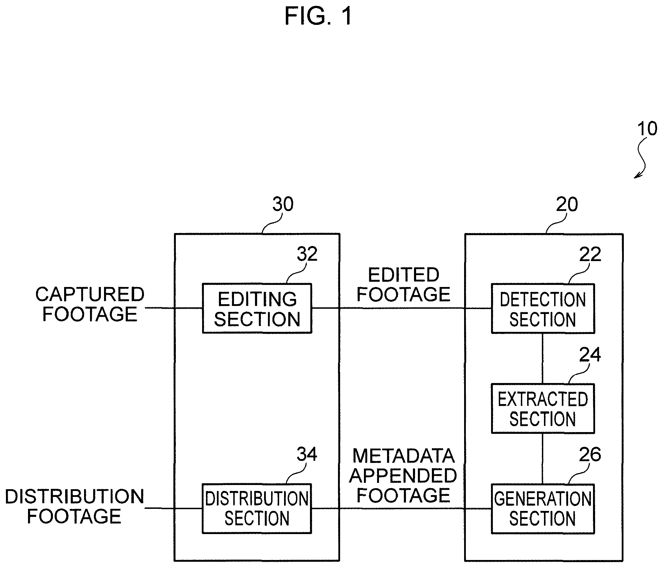

As illustrated in Fig. 1, a footage distribution system 10 according to the present exemplary embodiment includes an extraction device 20 and a distribution device 30. The extraction device 20 and the distribution device 30 are mutually connected through a network. In the footage distribution system 10, footage appended with metadata indicating exciting scenes extracted by the extraction device 20 is distributed through the network to a specified terminal by the distribution device 30. The extraction device 20 includes a detection section 22, an extraction section 24, and a generation section 26. The distribution device 30 includes an editing section 32, and a distribution section 3,4.

First, detailed description is given regarding each section of the distribution device 30.

The editing section 32 acquires captured footage of a soccer match (referred to as "captured footage" hereafter). Note that in the present exemplary embodiment, the footage is media including video data and audio data. The video data included in the captured footage is captured at a frame rate such as 30 fps or 60 fps, and includes plural frames. Each of the frames is associated with time data indicating the elapsed time since capture of the captured footage started. The captured footage includes audio data including audio such as cheering in the match stadium, and audio of commentators, live reports, and the like. The audio data is time sequenced data indicating a sound intensity level for respective sampling points, and at each sampling point, the audio data is associated with time data that synchronizes with time data associated with each frame in the video data, such that the audio data and the video data are synchronized with each other.

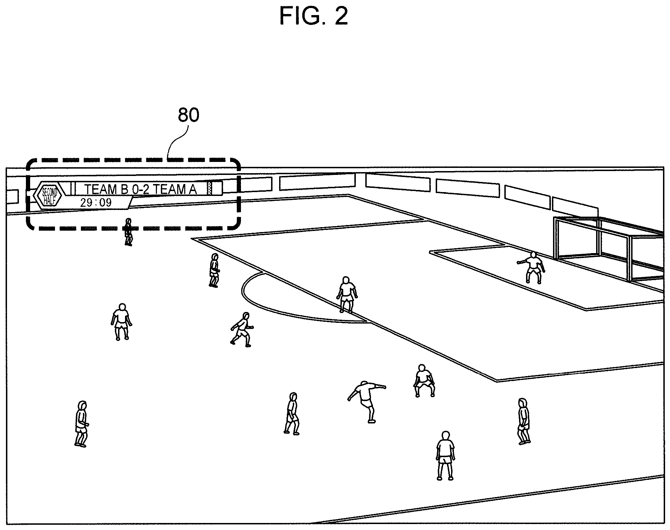

The editing section 32 applies editing instructions, instructed by an operation by an operator using a display device and an input device, not illustrated in the drawings, to each frame in the video data included in the captured footage using image processing. Editing instructions include, for example, adding an overlay 80 displaying a game state as illustrated in Fig. 2. Below, footage in which editing on the video data included in the captured footage has been performed by the editing section 32 is referred to as "edited footage". The editing section 32 transmits the edited footage to the extraction device 20.

The distribution section 34 acquires footage to which metadata generated by the extraction device 20 has been appended (referred to as "metadata appended footage" hereafter; detailed description given below). The metadata appended footage is converted to distribution footage, according to specified standards, and distributed to the distribution destination terminal (omitted from illustration in the drawings) by the distribution section 34.

Next, detailed description is given regarding each section of the extraction device 20.

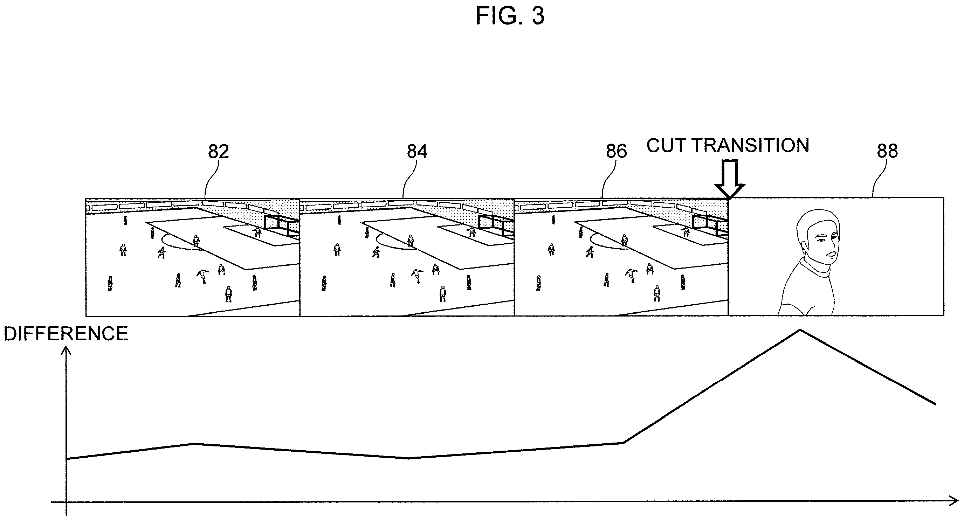

The detection section 22 acquires edited footage transmitted from the distribution device 30. The detection section 22 first detects a cut transition based on the video data included in the edited footage. Cut refers to continuous portions in the video data captured at the same angle. Specifically, the detection section 22 computes differences between each frame and the previous frame. The inter-frame difference is, for example, computed according to the sum of the differences in pixel data between pairs of corresponding pixels in the respective frames. As illustrated in Fig. 3, the detection section 22 monitors the computed differences for each frame compared to the respective previous frame, and frames for which the difference compared to the previous frame exceeds a specific threshold value are detected as frames representing a cut transition.

In the consecutive frames 82, 84, 86, 88 in Fig. 3, the difference between the frame 84 and the previous frame 82, and the difference between the frame 86 and the previous frame 84 are comparatively small values. However, the difference between the frame 88 and the previous frame 86 is a large value. Moreover, a cut transition is made between frame 86 and frame 88. Accordingly, a cut transition can be detected between frame 86 and frame 88 in the example of Fig. 3, namely, the frame 86 can be detected as the final frame of a preceding cut, and the frame 88 can be detected as the leading frame of the next cut, based on the difference between the frame 88 and the previous frame 86.

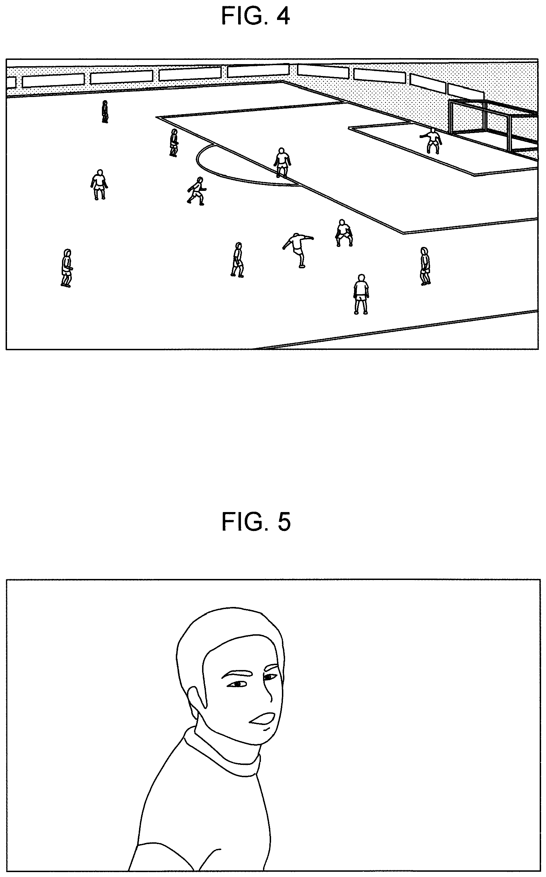

Moreover, the detection section 22 may designate the group of frames including from the leading frame until the final frame of the detected cut as a group of frames representing one cut. Then, the detection section 22 determines whether at least one frame included in the group of frames representing one cut is a frame captured at long distance (referred to as a "long distance frame" below), or a frame captured close-up (referred to as a "close-up frame" below). Note that long distance frames and close-up frames are examples of long distance capture video and close-up capture video of the technology disclosed herein. This determination may, for example, be performed by employing an identification model for identifying long distance frames and close-up frames. The identification model may be generated by, for example, training on plural long distance frames like those illustrated in Fig. 4, and plural close-up frames like those illustrated in Fig. 5. The detection section 22 detects a transition between a long distance frame and a close-up frame based on the determination result.

The extraction section 24 extracts a break in play based on the transition between the long distance frame and the close-up frame detected by the detection section 22. Generally, in footage of a soccer game, play is captured at long distance and transition is made to cut to a captured close-up, such as the demeanor of a player on the pitch or on the bench, at respective breaks between single plays. Accordingly, the location where transition is made between a long distance frame and a close-up frame is the start of, or end of, a single play. Note that a single play refers to continuous flow of the ball, from when a ball that was temporarily stopped due to a foul or the ball going out or the like starts to be in play again due to a free-kick, a throw-in, or the like, up until another stop. Note that the meaning of starting and stopping of the ball does not strictly refer to ball movement itself, but rather refers to the status of the ball at recommencement, or suspension, of play.

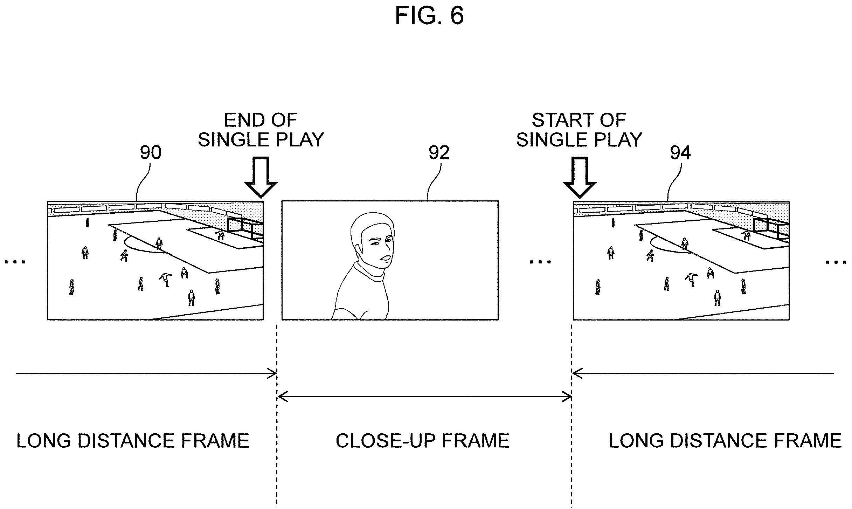

Specifically, as illustrated in Fig. 6, the extraction section 24 extracts the long distance frame of the transition from the close-up frame to the long distance frame (for example, frame 94 in Fig. 6) as a frame representing the start of a single play. Moreover, the long distance frame of the transition from the long distance frame to the close-up frame (for example, frame 90 in Fig. 6) is extracted as a frame representing the end of a single play. Namely, a group of frames from the frame representing the start of the single play until the frame representing the end of the single play can be extracted as a group of frames representing the single play.

The generation section 26 generates metadata indicating a break in play based on the group of frames extracted by the extraction section 24. Specifically, the generation section 26 generates metadata that associates data indicating the start of a single play with time data associated with a frame representing the start of the single play. Moreover, the generation section 26 generates metadata associating data indicating the end of a single play with time data associated with a frame representing the end of the single play.

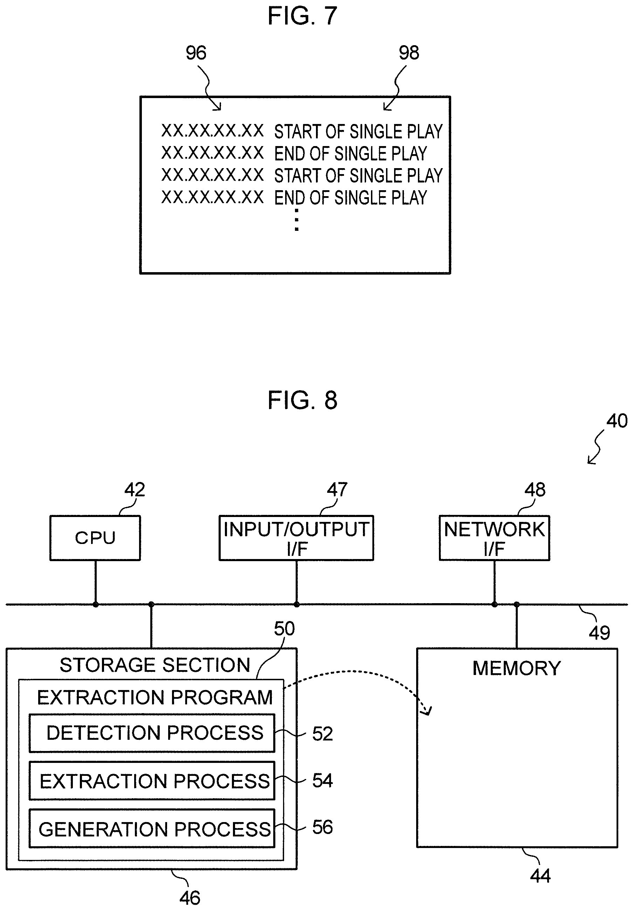

The generation section 26 generates a metadata file that stores the plural generated metadata in the sequence of the time data included in the metadata. The metadata file may be generated as a file formatted as, for example, a csv (comma-separated values) format file. An example of a metadata file is illustrated in Fig. 7. In the example of Fig. 7, each row represents a single item of metadata, and each item of metadata includes time data 96, and data representing either start or end of a single play (reference numeral 98).

Note that although explanation is given here regarding a case in which the metadata is generated using time data associated with frames, the metadata may be generated using other data that identifies each frame, such as frame numbers.

The edited footage is appended with the generated metadata file and transmitted to distribution device 30 as metadata appended footage by the generation section 26.

The extraction device 20 may, for example, be implemented by a computer 40 as illustrated in Fig. 8. The computer 40 includes a CPU 42, memory 44, a non-volatile storage section 46, an input/output interface (I/F) 47, and a network I/F 48. The CPU 42, the memory 44, the storage section 46, the input/output I/F 47, and the network I/F 48 are mutually connected through a bus 49.

The storage section 46 may be implemented by a hard disk drive (HDD), flash memory, or the like. An extraction program 50 that causes the computer 40 to function as the extraction device 20 is stored in the storage section 46 that serves as a recording medium. The CPU 42 reads the extraction program 50 from the storage section 46, expands the extraction program 50 into the memory 44, and sequentially executes the processes included in the extraction program 50.

The extraction program 50 includes a detection process 52, an extraction process 54, and a generation process 56. The CPU 42 operates as the detection section 22 illustrated in Fig. 1 by executing the detection process 52. The CPU 42 also operates as the extraction section 24 illustrated in Fig. 1 by executing the extraction process 54. The CPU 42 also operates as the generation section 26 illustrated in Fig. 1 by executing the generation process 56. The computer 40 executing the extraction program 50 thereby functions as the extraction device 20.

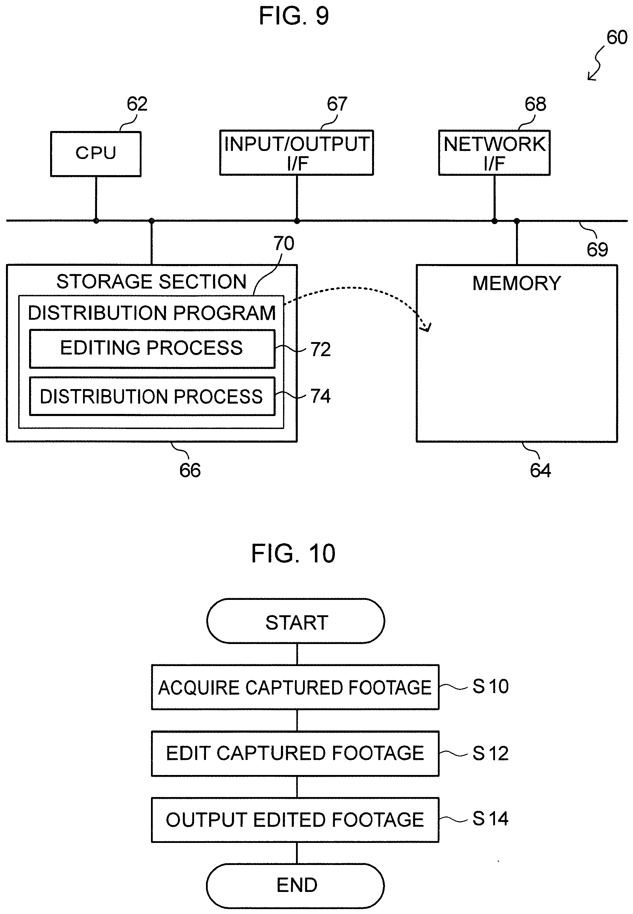

The distribution device 30 may be implemented by, for example, a computer 60 illustrated in Fig. 9. The computer 60 includes a CPU 62, memory 64, a non-volatile storage section 66, an input/output I/F 67, and a network I/F 68. The CPU 62, the memory 64, the storage section 66, the input/output I/F 67, and the network I/F 68 are mutually connected through a bus 69. Moreover, a display device and an input device, not illustrated in the drawings, are connected to the computer 60 through the input/output I/F 67.

The distribution device 30 and the extraction device 20 are connected through the network I/F 68 of the distribution device 30, the network, and the network I/F 48 of the extraction device 20.

The storage section 66 may be implemented by a HDD, flash memory, or the like. A distribution program 70 that causes the computer 60 to function as the distribution device 30 is stored in the storage section 66 that serves as a recording medium. The CPU 62 reads the distribution program 70 from the storage section 66 and expands the distribution program 70 into the memory 64, and sequentially executes the processes included in the distribution program 70.

The distribution program 70 includes an editing process 72 and a distribution process 74. The CPU 62 operates as the editing section 32 illustrated in Fig. 1 by executing the editing process 72. The CPU 62 also operates as the distribution section 34 illustrated in Fig. 1 by executing the distribution process 74. The computer 60 executing the distribution program 70 thereby functions as the distribution device 30.

The extraction device 20 and the distribution device 30 may each be implemented by, for example, a semiconductor integrated circuit, and more specifically by an application specific integrated circuit (ASIC) or the like.

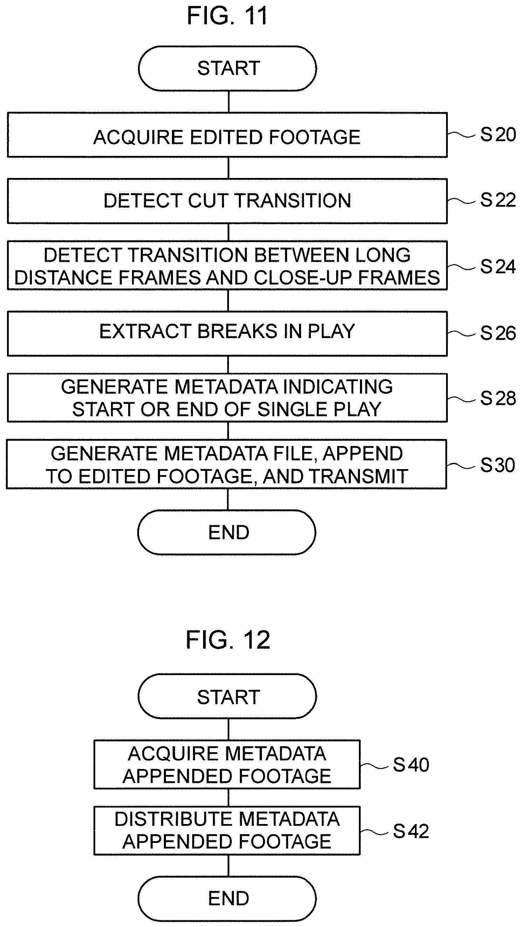

Explanation next follows regarding operation of the footage distribution system 10 according to the present exemplary embodiment. When the distribution device 30 is input with captured footage, the distribution device 30 executes editing processing illustrated in Fig. 10, and outputs edited footage. Next, when the extraction device 20 is input with the edited footage, the extraction device 20 executes extraction processing illustrated in Fig. 11, and outputs metadata appended footage. Then, when the distribution device 30 is input with the metadata appended footage, the distribution device 30 executes distribution processing illustrated in Fig. 12, and outputs distribution footage. Each type of processing is described in detail below.

First, at step S10 of the editing processing illustrated in Fig. 10, the editing section 32 acquires captured footage. Next, at step S12, the editing section 32 applies editing instructions instructed by operation of an operator using the display device and the input device, not illustrated in the drawings, to each frame of the video data included in the captured footage, using image processing. Next, at step S14, the editing section 32 transmits the edited footage to the extraction device 20, and editing processing ends.

Next, at step S20 of the extraction processing illustrated in Fig. 11, the detection section 22 acquires the edited footage transmitted from the distribution device 30.

Next, at step S22 the detection section 22 computes differences for each frame compared to the respective previous frame, so as to detect the leading frame and final frame of a cut based on frames for which the difference compared to the previous frame exceeds a specific threshold value.

Next, at step S24 the detection section 22 designates a group of frames, including from the leading frame until the final frame of the detected cut, as a group of frames representing a single cut. Then, the detection section 22 determines whether at least one frame included in the group of frames representing the single cut is a long distance frame, or a close-up frame. The detection section 22 detects a transition between a long distance frame and a close-up frame based on the determination result.

Next, at step S26 the extraction section 24 extracts a long distance frame of a transition from the close-up frame to the long distance frame as a frame representing the start of a single play. Moreover, the extraction section 24 extracts the long distance frame of a transition from a long distance frame to a close-up frame as a frame representing the end of a single play. Namely, the extraction section 24 extracts a group of frames from the frame representing the start of the single play until the frame representing the end of the single play as the group of frames representing the single play.

Next, at step S28, the generation section 26 generates metadata that associates data indicating the start of the single play to time data associated with the frames representing the start of the single play extracted by the extraction section 24. Moreover, the generation section 26 generates metadata that associates data representing the end of the single play to time data associated with the frames representing the end of the single play extracted by the extraction section 24.

Next, at step S30, the generation section 26 generates a metadata file storing the plural metadata generated at step S28 above in the sequence of the time data included in the metadata. The generation section 26 then appends the generated metadata file to the edited footage, and transmits the edited footage to the distribution device 30 as metadata appended footage, and extraction processing ends.

Next, at step S40 of the distribution processing illustrated in Fig. 12, the distribution section 34 acquires the metadata appended footage transmitted from the extraction device 20. Next, at step S42, the distribution section 34 converts the metadata appended footage to distribution footage according to the specified standards, and distributes the distribution footage to the distribution destination terminal (omitted from illustration in the drawings), and distribution processing ends.

As explained above, according to the extraction device 20 of the present exemplary embodiment, from frames of video data included in captured footage of a soccer game, a transition between a long distance frame and a close-up frame is detected, and the transition is extracted as a break in play. This thereby enables extraction of a break in play from captured footage of a soccer game.

In each of the exemplary embodiments above, easy location of respective scenes of single plays of sports game footage (the captured footage, or the edited footage) based on metadata is enabled when employing metadata appended footage, to which the metadata indicating the start and end of the extracted single play is appended. Moreover during footage distribution, for example, a supplementary service, such as transmission of email to a user, may be performed automatically coordinated with breaks in play based on the metadata.

Although explanation has been given of examples in which a footage distribution system includes a distribution device and an extraction device in each of the exemplary embodiments above, there is no limitation thereto. Each of the functional sections of the distribution device, and each of the functional sections of the extraction device may be implemented by a single computer.

Although explanation has been given of cases in which footage appended with metadata, generated by the extraction device, indicating the starts and ends of a single play is distributed by the distribution device in each of the exemplary embodiments above, there is no limitation thereto. For example, metadata appended footage may be saved as a large volume archive, and the respective single plays extracted and output based on the metadata.

The output from the extraction device may also be employed in applications other than footage distribution systems.

Although explanation has been given above of modes in which the extraction program 50 is pre-stored (installed) on the storage section 46, and the distribution program 70 is pre-stored (installed) on the non-volatile storage section 66, this may be provided in a format recorded on a recording medium such as a CD-ROM or a DVD-ROM.

One aspect exhibits the advantageous effect of enabling extraction of breaks in play from captured footage of a soccer game.

## Claims

1. An extraction program (50) that causes a computer (40) to execute processing comprising:
detecting (52) frames having an amount of change of a difference in pixel data between consecutive frames in a plurality of frames included in captured images obtained by capturing a sports game, of a predetermined threshold or higher, as cut transitions, and detecting a transition between a close-up captured image and a long distance captured image from the captured images by identifying whether at least one frame included in a group of frames before or after the cut transition is a close-up captured image or a long distance captured image; and
based on the detected transition, extracting (54) a timing corresponding to a break in play in the sports game, or extracting a captured image corresponding to a break in play in the sports game.

2. The extraction program of claim 1, the processing comprising:
detecting a transition from the close-up captured image to the long distance captured image; and
extracting the long distance captured image at the detected transition as a frame representing a start of a play in the sports game.

3. The extraction program of claim 1 or claim 2, the processing further comprising generating (56) metadata that associates data indicating the break in play with a frame corresponding to the extracted captured image.

4. An extraction method, comprising:
detecting frames having an amount of change of a difference in pixel data between consecutive frames in a plurality of frames included in captured images obtained by capturing a sports game, of a predetermined threshold or higher, as cut transitions, and detecting a transition between a close-up captured image and a long distance captured image from the captured images by identifying whether at least one frame included in a group of frames before or after the cut transition is a close-up captured image; and
by a processor (42), based on the detected transition, extracting a timing corresponding to a break in play in the sports game, or extracting a captured image corresponding to a break in play in the sports game.

5. The extraction method of claim 4, wherein:
a transition from the close-up captured image to the long distance captured image is detected; and
the long distance captured image at the detected transition is extracted as a frame representing a start of a play in the sports game.

6. An extraction device (10), comprising:
a detection section (22) configured to detect frames having an amount of change of a difference in pixel data between consecutive frames in a plurality of frames included in captured images obtained by capturing a sports game, of a predetermined threshold or higher, as cut transitions, and to detect a transition between a close-up captured image and a long distance captured image from the captured images by identifying whether at least one frame included in a group of frames before or after the cut transition is a close-up captured image or a long distance captured image; and
an extraction section (24) configured to extract, based on the detected transition, a timing corresponding to a break in play in the sports game, or to extract a captured image corresponding to a break in play in the sports game.

7. The extraction device of claim 6, wherein:
the detection section is configured to detect a transition from the close-up captured image to the long distance captured image; and
the extraction section is configured to extract the long distance captured image at the detected transition as a frame representing a start of a play in the sports game.

## Patentansprüche

1. Extraktionsprogramm (50), welches einen Computer (40) veranlasst, Verarbeiten auszuführen, welches umfasst:
Erkennen (52) von Frames mit einer Menge an Änderungen einer Differenz in Pixeldaten zwischen aufeinanderfolgenden Frames in einer Vielzahl von Frames, welche in aufgenommenen Bildern beinhaltet sind, welche durch Aufnehmen eines Sportspiels erhalten werden, mit einer vorbestimmten Schwelle oder höher, als Schnittübergänge, und Erkennen eines Übergangs zwischen einem als Nahaufnahme aufgenommenen Bild und einem aus großer Entfernung aufgenommenen Bild aus den aufgenommenen Bildern durch Identifizieren, ob zumindest ein Frame, welcher in einer Gruppe von Frames vor oder nach dem Schnittübergang beinhaltet ist, ein als Nahaufnahme aufgenommenes Bild oder ein aus großer Entfernung aufgenommenes Bild ist; und
auf Basis des erkannten Übergangs, Extrahieren (54) eines Zeitablaufs, welcher einer Spielunterbrechung in dem Sportspiel entspricht, oder Extrahieren eines aufgenommenen Bildes, welches einer Spielunterbrechung in dem Sportspiel entspricht.

2. Extraktionsprogramm nach Anspruch 1, wobei das Verarbeiten umfasst:
Erkennen eines Übergangs von dem als Nahaufnahme aufgenommenen Bild zu dem aus großer Entfernung aufgenommenen Bild; und
Extrahieren des aus großer Entfernung aufgenommenen Bildes an dem erkannten Übergang als einen Frame, welcher einen Beginn eines Spiels in dem Sportspiel darstellt.

3. Extraktionsprogramm nach Anspruch 1 oder Anspruch 2, wobei das Verarbeiten weiter Erzeugen (56) von Metadaten umfasst, welche Daten, welche die Spielunterbrechung angeben, mit einem Frame, welcher dem extrahierten aufgenommenen Bild entspricht, verknüpfen.

4. Extraktionsverfahren, umfassend:
Erkennen von Frames mit einer Menge an Änderungen einer Differenz in Pixeldaten zwischen aufeinanderfolgenden Frames in einer Vielzahl von Frames, welche in aufgenommenen Bildern beinhaltet sind, welche durch Aufnehmen eines Sportspiels erhalten werden, mit einer vorbestimmten Schwelle oder höher, als Schnittübergänge, und Erkennen eines Übergangs zwischen einem als Nahaufnahme aufgenommenen Bild und einem aus großer Entfernung aufgenommenen Bild aus den aufgenommenen Bildern durch Identifizieren, ob zumindest ein Frame, welcher in einer Gruppe von Frames vor oder nach dem Schnittübergang beinhaltet ist, ein als Nahaufnahme aufgenommenes Bild ist; und
durch einen Prozessor (42), auf Basis des erkannten Übergangs, Extrahieren eines Zeitablaufs, welcher einer Spielunterbrechung in dem Sportspiel entspricht, oder Extrahieren eines aufgenommenen Bildes, welches einer Spielunterbrechung in dem Sportspiel entspricht.

5. Extraktionsverfahren nach Anspruch 4, wobei:
ein Übergang von dem als Nahaufnahme aufgenommenen Bild zu dem aus großer Entfernung aufgenommenen Bild erkannt wird; und
das aus großer Entfernung aufgenommene Bild an dem erkannten Übergang als ein Frame extrahiert wird, welcher einen Beginn eines Spiels in dem Sportspiel darstellt.

6. Extraktionsvorrichtung (10), umfassend:
einen Erkennungsabschnitt (22), welcher konfiguriert ist, Frames mit einer Menge an Änderungen einer Differenz in Pixeldaten zwischen aufeinanderfolgenden Frames in einer Vielzahl von Frames, welche in aufgenommenen Bildern beinhaltet sind, welche durch Aufnehmen eines Sportspiels erhalten werden, mit einer vorbestimmten Schwelle oder höher, als Schnittübergänge zu erkennen, und einen Übergang zwischen einem als Nahaufnahme aufgenommenen Bild und einem aus großer Entfernung aufgenommenen Bild aus den aufgenommenen Bildern durch Identifizieren, ob zumindest ein Frame, welcher in einer Gruppe von Frames vor oder nach dem Schnittübergang beinhaltet ist, ein als Nahaufnahme aufgenommenes Bild oder ein aus großer Entfernung aufgenommenes Bild ist, zu erkennen; und
einen Extraktionsabschnitt (24), welcher konfiguriert ist, auf Basis des erkannten Übergangs, einen Zeitablauf, welcher einer Spielunterbrechung in dem Sportspiel entspricht, zu erkennen, oder ein aufgenommenes Bild, welches einer Spielunterbrechung in dem Sportspiel entspricht, zu extrahieren.

7. Extraktionsvorrichtung nach Anspruch 6, wobei:
der Erkennungsabschnitt konfiguriert ist, einen Übergang von dem als Nahaufnahme aufgenommenen Bild zu dem aus großer Entfernung aufgenommenen Bild zu erkennen; und
der Extraktionsabschnitt konfiguriert ist, das aus großer Entfernung aufgenommene Bild an dem erkannten Übergang als einen Frame, welcher einen Beginn eines Spiels in dem Sportspiel darstellt, zu extrahieren.

## Revendications

1. Programme d'extraction (50) qui amène un ordinateur (40) à exécuter un traitement comprenant :
la détection (52) de trames ayant une amplitude de changement d'une différence dans des données de pixels entre des trames consécutives dans une pluralité de trames incluses dans des images capturées obtenues en capturant un jeu vidéo de sport, d'un seuil prédéterminé ou plus élevé, en tant que transitions coupées, et la détection d'une transition entre une image capturée en gros plan et une image capturée à longue distance à partir des images capturées en identifiant si oui ou non au moins une trame incluse dans un groupe de trames avant ou après la transition coupée est une image capturée en gros plan ou une image capturée à longue distance ; et
sur la base de la transition détectée, l'extraction (54) d'un minutage correspondant à une pause dans la partie dans le jeu vidéo de sport, ou l'extraction d'une image capturée correspondant à une pause dans la partie dans le jeu vidéo de sport.

2. Programme d'extraction selon la revendication 1, le traitement comprenant :
la détection d'une transition de l'image capturée en gros plan vers l'image capturée à longue distance ; et
l'extraction de l'image capturée à longue distance au niveau de la transition détectée en tant que trame représentant un début d'une partie dans le jeu vidéo de sport.

3. Programme d'extraction selon la revendication 1 ou la revendication 2, le traitement comprenant en outre la génération (56) de métadonnées qui associent des données indiquant la pause dans la partie avec une trame correspondant à l'image capturée extraite.

4. Procédé d'extraction, comprenant :
la détection de trames ayant une amplitude de changement d'une différence dans des données de pixels entre des trames consécutives dans une pluralité de trames incluses dans des images capturées obtenues en capturant un jeu vidéo de sport, d'un seuil prédéterminé ou plus élevé, en tant que transitions coupées, et la détection d'une transition entre une image capturée en gros plan et une image capturée à longue distance à partir des images capturées en identifiant si oui ou non au moins une trame incluse dans un groupe de trames avant ou après la transition coupée est une image capturée en gros plan ou une image capturée à longue distance ; et
au moyen d'un dispositif de traitement (42), sur la base de la transition détectée, l'extraction d'un minutage correspondant à une pause dans la partie dans le jeu vidéo de sport, ou l'extraction d'une image capturée correspondant à une pause dans la partie dans le jeu vidéo de sport.

5. Procédé d'extraction selon la revendication 4, dans lequel :
une transition de l'image capturée en gros plan vers l'image capturée à longue distance est détectée ; et
l'image capturée à longue distance au niveau de la transition détectée est extraite en tant que trame représentant un début d'une partie dans le jeu vidéo de sport.

6. Dispositif d'extraction (10), comprenant :
une section de détection (22) configurée pour détecter des trames ayant une amplitude de changement d'une différence dans des données de pixels entre des trames consécutives dans une pluralité de trames incluses dans des images capturées obtenues en capturant un jeu vidéo de sport, d'un seuil prédéterminé ou plus élevé, en tant que transitions coupées, et pour détecter une transition entre une image capturée en gros plan et une image capturée à longue distance à partir des images capturées en identifiant si oui ou non au moins une trame incluse dans un groupe de trames avant ou après la transition couplée est une image capturée en gros plan ou une image capturée à longue distance ; et
une section d'extraction (24) configurée pour extraire, sur la base de la transition détectée, un minutage correspondant à une pause dans une partie dans le jeu vidéo de sport, ou pour extraire une image capturée correspondant à une pause dans la partie dans le jeu vidéo de sport.

7. Dispositif d'extraction selon la revendication 6, dans lequel :
la section de détection est configurée pour détecter une transition d'une image capturée en gros plan vers l'image capturée à longue distance ; et
la section d'extraction est configurée pour extraire l'image capturée à longue distance au niveau de la transition détectée en tant que trame représentant un début d'une partie dans le jeu vidéo de sport.
